# EUROPEAN PATENT SPECIFICATION

(11) **EP 2 809 094 B1**
(45) Date of publication and mention of the grant of the patent: **26.12.2018**
(21) Application number: 13169902.7
(22) Date of filing: 30.05.2013
(51) Int. Cl.: H04W 4/18, H04W 88/18, H04W 28/02, H04L 29/08

(54) **Method and device for allowing wireless communication equipments to access to contents stored into near delivery nodes of a cdn**
Verfahren und Vorrichtung zur Ermöglichung des Zugriffs von drahtlosen Kommunikationsgeräten auf Inhalte, die in Nahbereitstellungsknoten eines CDN gespeichert sind
Procédé et dispositif permettant à des équipements de communication sans fil d'accéder à un contenu stocké dans des noeuds de distribution proche d'un CDN

(43) Date of publication of application: 03.12.2014
(73) Proprietor: Alcatel Lucent, 91620 Nozay (FR)
(72) Inventor: Mongazon-Cazavet, Bruno, 91620 Nozay (FR); El Mghazli, Yacine, 91620 Nozay (FR); Thomas, Laurent, 91620 Nozay (FR)
(74) Representative: Nokia EPO representatives

(56) References cited:
- WO-A1-2012/063100
- WO-A1-2012/078082
- WO-A1-2013/020602
- US-A1- 2011 280 143

## Description

### Technical field

The present invention relates to access to contents stored into delivery nodes of a content delivery network (or CDN) by wireless communication equipments.

One means here by "wireless communication equipment" any electronic equipment implementing at least one application and comprising a user interface and a wireless communication module capable of establishing wireless communications with a cellular network.

Moreover, one means here by "content" a group of digital data defining web objects, downloadable objects (such as media files, software or documents), applications or real time media streams.

### Background of the invention

As known by those skilled in the art, a content delivery network (or content distribution network or else CDN) is a system of (memory) caches containing copies of (data) contents and located in different points of a network to allow bandwidth maximization when communication equipments of clients access to contents all over this network. With such a CDN, clients are supposed to access to content copies that are stored near their communication equipments, while without CDN all clients of a network access to the same central content server, which generally induces bottlenecks near that central content server.

Most CDN architectures comprised delivery nodes, storage nodes, origin nodes, and a service node (or control node). A delivery Node (or delivery appliance) is arranged for delivering contents to consumers. It contains (memory) cache(s), each running one or more delivery applications, and tends to be deployed as close to the cellular network edge (near the consumers) as possible. A storage node is arranged for providing data to (memory) cache(s) of delivery node(s). It can be deployed in a hierarchical model to allow tiered caching and protection to any origin server. It may also be used where pre-publishing of content is required rather than content being acquired on request from an origin server. An origin node is the master source for contents and can be deployed within an operator's network (on-net) or more commonly within a content owner's infrastructure. Usually several origin nodes are used for scale and resilience. A service node (or control node) is arranged for hosting the management, routing and monitoring of components of a CDN. Typically, it defines the integration point into any OSS/BSS system and network operation center.

In the CDN world, the word "near" refers to a distance in the IP topology of a communication network. The CDN role is to take into account this notion of IP distance and to determine the appropriate delivery node where to route each content request of a user (or client). It is important to note that the use of the IP distance criterion does not prevent a CDN to use additional criteria like latency or network load.

Such a model works very well for the fixed or wired communication networks (where user IP addresses reflect the actual network topology), but it does not works well for the cellular networks. Indeed, the packet core of a cellular network (for instance of the LTE type) is designed in a centralized way so that all traffic is tunneled through a single PDN gateway (or PGW), which means that all wireless communication equipments are one IP hop away from the PGW. Therefore, this does not allow the CDN service node to determine the delivery node that is the nearest from a requesting wireless communication equipment by using solely the IP address of the latter, since this has no meaning within the LTE network. Moreover, this does not allow placing the delivery nodes lower in the LTE network than on the SGi interface, i.e. next to the PGW.

This appears to be a main issue because cellular networks face the same traffic problems as wired network.

All the known solutions trying to address this issue propose to equip the cellular network with several dedicated local PGWs "near" the (LTE) cells in order to allow each user to access to the closest delivery node located behind a local PGW. These solutions (which are an evolution of SIPTO ("Selected IP traffic Offload") technology) intend keeping unchanged the principle of the tunnel between the user wireless communication equipment and the PGW and consequently reducing the impact on the wireless communication equipment whose modem remains unchanged.

Unfortunately, these solutions impact upper layers of wireless communication equipments. Indeed, the wireless communication equipment becomes responsible of dealing with the different local PGWs via a kind of connection manager. So, the wireless communication equipment must not only deal with several LTE interfaces (which is the goal of OPIIS work in 3GPP), but also manage the CDN signaling, which might be complex (whenever it is possible).

The document WO 2012063100 titled "Method and apparatus for enabling DNS redirection in mobile telecommunication systems", the document US 2011280143 titled "System, apparatus for content delivery for internet traffic and methods thereof" and the document WO 2012078082 titled "Method for enabling traffic acceleration in a mobile telecommunication network" are known from the prior art.

### Summary of the invention

So, an objective of the invention is to improve the situation, notably by allowing installation of delivery nodes near the cells of a cellular network to offload its backbone. The invention is set out in the appended claims. The embodiments and/or examples of the following description, which are not covered by the appended claims, are considered as not being part of the present invention.

### Brief description of the figures

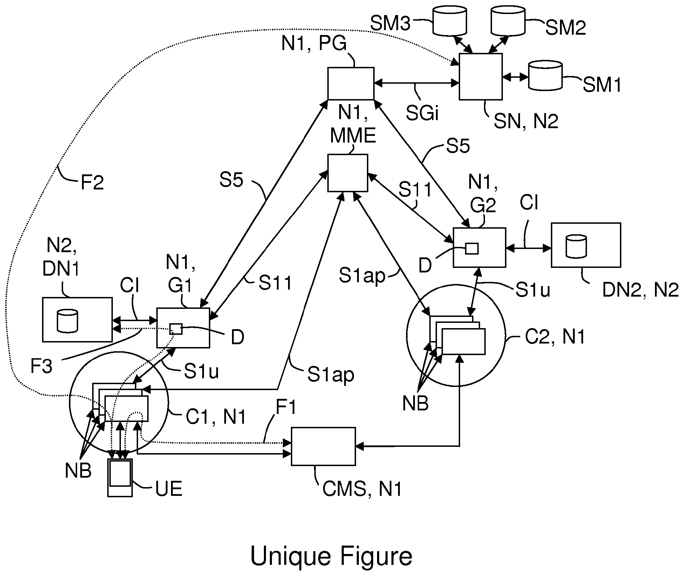

Other features and advantages of the invention will become apparent on examining the detailed specifications hereafter and the appended drawing, wherein the unique figure schematically and functionally illustrates an example of embodiment of a cellular network coupled to a CDN and comprising distributed gateways each equipped with a device according to the invention and each coupled to a cell.

### Detailed description of the preferred embodiment

The appended drawings may serve not only to complete the invention, but also to contribute to its understanding, if need be.

The invention aims, notably, at offering a method, and an associated device D, intended for allowing a wireless communication equipment UE, that is connected to a cellular network N1, to access to contents stored into delivery nodes DNj of a content delivery network (or CDN) N2 coupled to this cellular network N1.

In the following description it will be considered that the cellular network N1 is a LTE network ("Long Term Evolution") that is used by a mobile network operator (or MNO). But it could be also a 3GPP cellular network, such as an UMTS network, for instance.

Moreover, in the following description it will be considered that the user wireless communication equipments UE are mobile telephones (such as smartphones). But the user wireless communication equipment UE could be any type of electronic equipment implementing at least one application and comprising a user interface and a wireless communication module capable of establishing wireless communications with a cellular network

A very simplified example of cellular network N1 is illustrated in the unique figure. In this non-limiting example, the cellular network N1 comprises:
- two cells Ck (with k = 1 or 2), each comprising at least one Node B (or eNode B) NB,
- a Mobile Management Entity MME coupled to Node Bs NB through Slap links,
- a PDN (or "Public Data Network") gateway (or PGW) PG coupled to equipments of a content delivery network N2 through a SGi link,
- two gateways Gi, each coupled to the Mobile Management Entity MME through a S11 link, to the PDN gateway (or PGW) PG through a S5 link, to Node Bs NB of at least one cell Ck through S1u links, and to at least one delivery node (or delivery appliance) DNj of the content delivery network N2 through a CDN interface CI, and
- a content management system CSM, also named origin node, defining a master source for content, that can be deployed within the operator's network (on-net) or more commonly within a content owner's infrastructure, and which is accessible to the cell equipments. Usually, several origin nodes are provided for scale and resilience.

It is important to note that in a LTE network a gateway Gi is called Signalling Gateway or SGW, while in an UMTS network a gateway Gi can be a SGSN or a RNC. Moreover, in the non-limiting example, each gateway Gi (i = 1 or 2) is a distributed one acting for only one cell Ck. This aims at simplifying the figure. But each gateway Gi is generally dedicated to a chosen area or region, and therefore acts for several cells Ck.

The content delivery network N2 comprises delivery nodes DNj (j = 1 or 2 in the example), storage nodes SMa (a = 1 to 3 in the examples), an origin node (not illustrated), and a service node (or control node) SN. The PDN gateway (or PGW) PG is at least coupled to the service node SN through the SGi link.

The method, according to the invention, comprises two steps (i) and (ii), which may be implemented by the example of cellular network N1 and content delivery network N2 illustrated in the unique figure, and notably by the gateway(s) Gi and associated device(s) D.

This method may be implemented by a computer program product comprising a set of instructions that can run in electronic equipments comprising processing means.

A first step (i) of the method starts when a user has decided to download a chosen content with his wireless communication equipment UE, which is connected to a Node B NB of a cell (here C1) of the cellular network N1. In a first step (i) the wireless communication equipment UE sends a request for a content into a (GTP) tunnel that is defined into the cellular network N1 where it is intercepted and decapsulated by a gateway Gi (here G1) in order to verify if a first IP address it comprises matches a second IP address of a delivery node DNj' (here DN1) that is the nearest from this wireless communication equipment UE according to the topology of the cellular network N1. In the affirmative this gateway G1 extracts this request from the (GTP) tunnel and re-routes it toward this delivery node DN1 through an interface Cl of the content delivery network N2. This part of the first step (i) is materialized by line F3 in the unique figure.

In fact, each gateway Gi comprises a device D arranged for intercepting and decapsulating each received content request to verify if its first IP address matches the second IP address of the nearest delivery node DNj' according to the cellular network topology, and in the affirmative for extracting this request from the (GTP) tunnel and for triggering its re-routing toward the nearest delivery node DNj' by its gateway Gi, through an interface Cl of the content delivery network N2.

The mapping between the first IP address and the nearest delivery node DNj' is configured at the SGW level. If the first IP address comprised into a re-directed request does not match the configured second IP address(es), the GTPv1 packets of the re-directed request are transmitted to the PGW PG on the S5 link. In the case where a gateway is coupled to several delivery nodes DNj of a list, the nearest delivery node DNj' is chosen from this list.

This solution does not assume that the SGW Gi keeps specific contexts or any specific signaling at all (the list of the destination addresses is configured and nearly static). This list may correspond to the different CDNs that may be connected to the LTE network N1 of a MNO. Moreover, this solution is fully compliant with LTE macro mobility (or SGW relocation), since the translation (or replacement) of the IP addresses is local to the SGW Gi.

For instance, the first IP address may be provided to the wireless communication equipment UE by a service node SN. In this case, during the first step (i) the wireless communication equipment UE sends its content request to a service node SN of the content delivery network N2, and this service node SN orders this wireless communication equipment UE to re-direct its request toward the chosen first IP address. This other part of the first step (i) is materialized by line F2 in the unique figure.

In fact, when a wireless communication equipment UE requests a content, the service node SN recognizes which MNO it belongs to, but it cannot deduce from the IP address of this wireless communication equipment UE its location in its cellular network N1, and consequently the nearest delivery node DNj'. That is the reason why the service node SN re-directs the traffic (using e.g. DNS ("Domain Name System")) to a common first IP address. So this first IP address must only be unique per CDN (N2) and known by a SGW Gi.

It is important to note that this first IP address may, or may not, designate a delivery node DNj of the content delivery network N2. Indeed, such a first IP address is only intended for triggering an action into a gateway Gi of the cellular network N1, when it is detected into a request (GTPv1 packets).

Usually, the requesting wireless communication equipment UE does not know the service node SN to which it must send its request. So, preferably and as illustrated in the unique figure, in the first step (i), before the wireless communication equipment UE sends its (content) request to the service node SN, it (UE) sends first its request to the content management system CMS that is accessible through its cellular network N1 and knows the service node SN that corresponds to the location of the wireless communication equipment UE into the cellular network N1. Then this content management system CMS orders the wireless communication equipment UE to re-direct its request toward a designated service node SN. This preliminary phase of the first step (i) is materialized by line F1 in the unique figure.

For instance, each device D may be arranged for replacing transparently the first IP address comprised into the re-directed request with a second IP address designating the nearest delivery node DNj' (here DN1). But such an IP address replacement is not mandatory. Indeed, when the cellular network N1 is private, the same IP address may be allocated to all the local delivery nodes DNj and no IP address replacement is needed. The possible IP address replacement may be carried out by means of a NAT ("Network Address Translation") mechanism, for instance.

It is important to note that the nearest delivery node DNj' may be chosen by the device D of the chosen gateway Gi depending on the value taken by at least one parameter associated to each delivery node DNj. Such a parameter may be representative of the content storage of each delivery node DNj, i.e. the number of contents (or the percentage of the total number of contents) stored into its (memory) cache. This parameter is sometimes called the "state of health" (or SoH). In this case, the device D may be arranged for extracting the content request from the (GTP) tunnel and for triggering its re-routing toward the nearest delivery node DNj' (here DN1) by its gateway Gi (here G1), through an interface Cl of the content delivery network N2, if, and only if, this nearest delivery node DNj' is associated to a value of the parameter that is greater than a chosen threshold. For instance, this chosen threshold may correspond to 100% of the total number of contents stored in the storage nodes SMa or in the origin node.

This selection criterion based on the value of a parameter is intended for reducing the probability that the nearest delivery node DNj' does not store the requested content, and therefore had to request it from its content delivery network N2 by means of a mechanism known from the man skilled in the art.

In the case where the device D of the concerned gateway Gi (here G1) cannot find a delivery node DNj' associated to a parameter value greater than a chosen threshold, it does not proceed to the extraction of the content request from its (GTP) tunnel, but triggers routing by its gateway Gi of the unmodified content request (i.e. with its first IP address) toward the PDN gateway (or PGW) PG to which it is connected through a S5 link, so that it processes this request in a classical manner.

In the case where the device D of the gateway Gi (here G1) finds several delivery nodes DNj' associated respectively to parameter values greater than the chosen threshold, it may select the one that is the best classified in a priority list it comprises.

A second step (ii) of the method starts when the nearest delivery node DNj' (here DN1) has received the modified request from the chosen gateway Gi (here G1). In a second step (ii) the nearest delivery node DNj' (here DN1) transmits the requested content to the chosen gateway Gi (her G1), through the interface Cl of the content delivery network N2, into a response message (GTPv1 packets) that contain(s) its second IP address. Then, the device D of the gateway Gi (here G1) triggers re-routing by its gateway G1 of this response message through the (initial GTP) tunnel toward the concerned wireless communication equipment UE.

For this purpose, the device D may replace transparently the second IP address comprised into the response message with the first IP address (initially contained into the corresponding content request) to produce a modified response message. This requires that the device D temporarily stores a correspondence between the first and second IP addresses and the identifier (TE-id) of the concerned GTP tunnel. The IP address replacement may be carried out by means of a NAT ("Network Address Translation") mechanism, for instance.

Because there is a single point of transmission on a SGW Gi, packets coming from both Internet (S5 link) and CDN (CI link) can be properly ordered into send queue of the SGW Gi, before being transmitted to their respective addressees.

This second step (ii) is materialized by line F3 in the unique figure.

So, according to the invention, a gateway Gi (with its device D) looks transparently into the uplink data traffic (i.e. into GTPv1 packets) of each requesting wireless communication equipment UE and re-routes directly the appropriate traffic to the "nearest" delivery node DNj, and re-routes transparently each downlink data traffic from the "nearest" delivery node DNj toward the concerned wireless communication equipment UE. A gateway Gi (with its device D) may also receive information on the state of health (SoH) of a delivery node DNj from the CDN N2 and possibly de-activate the re-routing.

This allows to place the delivery nodes DNj near the cells Ck, at the SGW level, which is a good trade off with respect to micro-mobility constraints, and this also allows to automatically and transparently re-route the CDN traffic from/to the nearest delivery node DNj (from the SGW point of view), which avoids loading the backbone between the SGW (Gi) and the PGW (PG).

So, implementation of the invention does not imply any change into the wireless communication equipments UE or the CDN N2.

It is important to note that the device D can be made of software modules (or a computer program product). But it may be also made of a combination of software modules and electronic circuit(s) or hardware modules.

The invention provides a way for existing cellular network to take advantage, in an immediate and transparent manner, of CDN technology, and in particular from its capability to provide content "closed" to cell sites.

The invention is not limited to the embodiments of method, device and gateway described above, only as examples, but it encompasses all alternative embodiments which may be considered by one skilled in the art within the scope of the claims hereafter.

## Claims

1. Method for allowing a wireless communication equipment (UE), connected to a cellular network (N1), to access to contents stored into delivery nodes (DNj) of a content delivery network (N2), said method comprising:
- a step (i) during which said wireless communication equipment (UE) sends a request for a content to a content management system (CMS) accessible through said cellular network (N1), then said content management system (CMS) orders said wireless communication equipment (UE) to re-direct said request toward a service node (SN) of said content delivery network (N2) which orders said wireless communication equipment (UE) to re-direct this request toward a first IP address, then said request is sent into a tunnel defined into said cellular network (N1) where it is intercepted and decapsulated by a gateway (Gi) to verify if said first IP address it comprises matches a second IP address of a delivery node (DNj') that is the nearest from said wireless communication equipment (UE) according to a topology of said cellular network (N1) and that is associated to a value of a parameter representative of a content storage that is greater than a chosen threshold, and in the affirmative, said gateway (Gi) extracts this request from said tunnel and re-routes it toward said delivery node (DNj') through an interface of said content delivery network (N2), and
- a step (ii) during which said delivery node (DNj') transmits said requested content to said gateway (Gi), into a response message containing its second IP address, then said gateway (Gi) re-routes said response message through said tunnel toward said wireless communication equipment (UE).

2. Method according to claim 1, wherein in step (i) said gateway (Gi) replaces transparently said first IP address contained into said request with said second IP address of said nearest delivery node (DNj') and then re-routes this request.

3. Method according to one of claims 1 to 2, wherein in step (i), if several delivery nodes (DNj') are associated respectively to values of the parameter representative of a content storage greater than the chosen threshold, said gateway (Gi) re-routes said request toward the delivery node (DNj') that is best classified in a priority list it comprises.

4. Method according to one of claims 1 to 3, wherein in step (i), in the case where said gateway (Gi) cannot find a delivery node (DNj') associated to a parameter value greater than a chosen threshold, it does not extract said request from said tunnel and then routes it according to its first IP address toward a public data network gateway (PG) to which it is connected, that belongs to said cellular network (N1) and which is connected to said content delivery network (N2).

5. Computer program product comprising a set of instructions arranged, when it is executed by processing means within a user equipment (UE), a content management system (CMS), a service node (SN), a delivery node (DNj') and a gateway (Gi), for performing the method according to one of claims 1 to 4.

## Patentansprüche

1. Verfahren, um zu gestatten, dass ein drahtloses Kommunikationsgerät (UE), das mit einem Zellularnetzwerk (N1) verbunden ist, auf Inhalte zugreift, die in Übergabeknoten (DNj) eines Inhalteübergabenetzwerks (N2) gespeichert sind, wobei das Verfahren umfasst:
- einen Schritt (i), während dem das drahtlose Kommunikationsgerät (UE) eine Anforderung für einen Inhalt an ein Inhaltsmanagementsystem (CMS) sendet, auf das durch das Zellularnetzwerk (N1) zugegriffen werden kann, dann befiehlt das Inhaltmanagementsystem (CMS) dem drahtlosen Kommunikationsgerät (UE), die Anforderung zu einem Dienstleistungsknoten (SN) des Inhaltübergabenetzwerks (N2) umzuleiten, das dem drahtlosen Kommunikationsgerät (UE) befiehlt, seine Anforderung zu einer ersten IP-Adresse umzuleiten, dann wird die Anforderung in einen in das Zellularnetzwerk (N1) definierten Tunnel gesendet, wo sie von einem Gateway (Gi) abgefangen und entkapselt wird um zu verifizieren, ob die erste IP-Adresse, die sie umfasst, einer zweiten IP-Adresse eines Übergabeknotens (DNj') entspricht, die gemäß einer Topologie des Zellularnetzwerks (N1) der Nächste von dem drahtlosen Kommunikationsgerät (UE) ist und die mit einem Wert eines Parameters assoziiert ist, der einen Inhaltsspeicher repräsentiert, der größer ist als ein gewählter Schwellwert, und bei Bestätigung extrahiert der Gateway (Gi) diese Anforderung aus dem Tunnel und lenkt sie zu dem Übergabeknoten (DNj') durch eine Schnittstelle des Inhaltsübergabenetzwerks (N2) um, und
- einen Schritt (ii), während dem der Übergabeknoten (DNj') den angeforderten Inhalt zu dem Gateway (Gi) in einer Antwortnachricht überträgt, die ihre zweite IP-Adresse enthält, dann leitet das Gateway (Gi) die Antwortnachricht durch den Tunnel zu dem drahtlosen Kommunikationsgerät (UE) um.

2. Verfahren nach Anspruch 1, wobei in Schritt (i) das Gateway (Gi) die erste IP-Adresse, die in der Anforderung enthalten ist, transparent mit der zweiten IP-Adresse des nächsten Übergabeknotens (DNj') ersetzt und dann diese Antwort umleitet.

3. Verfahren nach einem der Ansprüche 1 bis 2, wobei in Schritt (i), falls mehrere Übergabeknoten (DNj') jeweils mit Werten des Parameters assoziiert sind, die einen Inhaltsspeicher repräsentieren, der größer ist als der gewählte Schwellwert, das Gateway (Gi) die Anforderung zu dem Übergabeknoten (DNj') umleitet, der in einer Prioritätsliste, die er umfasst, am besten klassifiziert ist.

4. Verfahren nach einem der Ansprüche 1 bis 3, wobei in Schritt (i) in dem Fall, dass das Gateway (Gi) keinen Übergabeknoten (DNj') finden kann, der mit einem Parameterwert assoziiert ist, der über einem gewählten Schwellwert liegt, es die Anforderung nicht aus dem Tunnel extrahiert und sie dann gemäß seiner ersten IP-Adresse zu einem öffentlichen Datennetzwerk-Gateway (PG) lenkt, mit dem es verbunden ist, das zu dem Zellularnetzwerk (N1) gehört und das mit dem Inhaltsübergabenetzwerk (N2) verbunden ist.

5. Computerprogrammprodukt, umfassend einen Satz von Anweisungen, der so angeordnet ist, dass, wenn er durch Verarbeitungsmittel innerhalb eines Teilnehmergeräts (UE), ein Inhaltsmanagementsystem (CMS), einen Dienstleistungsknoten (SN), einen Übergabeknoten (DNj') und ein Gateway (Gi) ausgeführt wird, zum Durchführen des Verfahrens nach einem der Ansprüche 1 bis 4.

## Revendications

1. Procédé pour permettre à un équipement de communication sans fil (UE), connecté à un réseau cellulaire (N1), d'avoir accès à des contenus stockés dans des noeuds de distribution (DNj) d'un réseau de distribution de contenu (N2), ledit procédé comprenant :
- une étape (i) pendant laquelle ledit équipement de communication sans fil (UE) envoie une demande pour un contenu à un système de gestion de contenu (CMS) accessible à travers ledit réseau cellulaire (N1), ensuite ledit système de gestion de contenu (CMS) ordonne audit équipement de communication sans fil (UE) de rediriger ladite demande vers un noeud de service (SN) dudit réseau de distribution de contenu (N2) qui ordonne audit équipement de communication sans fil (UE) de rediriger cette demande vers une première adresse IP, ensuite ladite demande est envoyée dans un tunnel défini dans ledit réseau cellulaire (N1) où elle est interceptée et décapsulée par une passerelle (Gi) pour vérifier si ladite première adresse IP qui la comprend, correspond à une seconde adresse IP d'un noeud de distribution (DNj') qui est le plus proche dudit équipement de communication sans fil (UE) en fonction d'une topologie dudit réseau cellulaire (N1) et qui est associée à une valeur d'un paramètre représentant un stockage de contenu qui est supérieure à un seuil choisi, et dans l'affirmative, ladite passerelle (Gi) extrait cette demande dudit tunnel et la réachemine vers ledit noeud de distribution (DNj') au moyen d'une interface dudit réseau de distribution de contenu (N2) et
- une étape (ii) pendant laquelle ledit noeud de distribution (DNj') transmet ledit contenu demandé à ladite passerelle (Gi) dans un message de réponse contenant sa seconde adresse IP, ensuite ladite passerelle (Gi) réachemine ledit message de réponse à travers ledit tunnel vers ledit équipement de communication sans fil (UE).

2. Procédé selon la revendication 1, dans lequel, à l'étape (i), ladite passerelle (Gi) remplace de manière transparente ladite première adresse IP contenue dans ladite demande par ladite seconde adresse IP dudit noeud de distribution le plus proche (DNj') et, ensuite, réachemine cette demande.

3. Procédé selon l'une des revendications 1 à 2, dans lequel, à l'étape (i), si plusieurs noeuds de distribution (DNj') sont associés respectivement à des valeurs du paramètre représentant un stockage de contenu supérieur au seuil choisi, ladite passerelle (Gi) réachemine ladite demande vers le noeud de distribution (DNj') qui est le mieux classé dans une liste de priorité qui le comprend.

4. Procédé selon l'une des revendications 1 à 3, dans lequel, à l'étape (i), dans le cas où ladite passerelle (Gi) ne peut pas trouver un noeud de distribution (DNj') associé à une valeur de paramètre supérieure à un seuil choisi, elle n'extrait pas ladite demande dudit tunnel et, ensuite, l'achemine en fonction de sa première adresse IP vers une passerelle de réseau public de transmission de données (PG) à laquelle elle est connectée, qui appartient au dit réseau cellulaire (N1) et qui est connectée au dit réseau de distribution de contenu (N2).

5. Produit-programme d'ordinateur comprenant un ensemble d'instructions agencées, lorsqu'il est exécuté par un moyen de traitement dans un équipement utilisateur (UE), un système de gestion de contenu (CMS), un noeud de service (SN), un noeud de distribution (DNj') et une passerelle (Gi), pour réaliser le procédé selon l'une des revendications 1 à 4.
